# EUROPÄISCHE PATENTSCHRIFT

(11) **EP 1 646 850 B1**
(45) Veröffentlichungstag und Bekanntmachung des Hinweises auf die Patenterteilung: **08.09.2021**
(21) Anmeldenummer: 04740689.7
(22) Anmeldetag: 06.07.2004
(51) Int. Cl.: G01F 11/10, G01F 11/00, B65D 83/06, G01F 11/18

(54) **DOSIERVORRICHTUNG UND VERFAHREN ZUR DOSIERUNG**
DOSING DEVICE AND METHOD FOR DOSING
DISPOSITIF ET PROCEDE DE DOSAGE

(30) Priorität: 09.07.2003 DE 10331029
(43) Veröffentlichungstag der Anmeldung: 19.04.2006
(73) Patentinhaber: Boehringer Ingelheim International GmbH, 55216 Ingelheim am Rhein (DE); Boehringer Ingelheim Pharma GmbH & Co. KG, 55216 Ingelheim am Rhein (DE)
(72) Erfinder: BRICKL, Rolf-Stefan, 88447 Warthausen (DE); SCHRAIVOGEL, Jürgen, 88444 Ummendorf/Fischbach (DE)
(74) Vertreter: Simon, Elke Anna Maria
(86) Internationale Anmeldenummer: PCT/EP2004/007363
(87) Internationale Veröffentlichungsnummer: WO 2005/005936

(56) Entgegenhaltungen:
- WO-A-00/37897
- DE-U- 9 309 294
- DE-U- 9 309 686
- DE-U- 29 515 145
- US-A1- 2003 071 070
- None

## Beschreibung

Die Erfindung betrifft eine Dosiervorrichtung nach dem Oberbegriff des Anspruchs 1 für kleinpartikuläre pharmazeutische Präparate, insbesondere für Präparate in Form von Pellets, Granulaten oder Extrudaten. Ferner betrifft die Erfindung ein Verfahren zur Dosierung derartiger kleinpartikulärer pharmazeutischer Präparate sowie ein Verfahren zur Dosierung und Einstellung des Mischungsverhältnisses mindestens zweier gemeinsam einzunehmender, kleinpartikulärer pharmazeutischer Präparate.

Kleinteilige Darreichungsformen von pharmazeutischen Präparaten, wie Pellets, Granulate oder Extrudate, weisen gegenüber Single-Unit-Formen wie Tabletten unter anderem die Vorteile auf, dass die kleinpartikulären Präparate zum einen eine gleichmäßigere Verteilung im Intestinaltrakt zeigen, was besonders wichtig bei Retardformen ist, und zum anderen besser zu schlucken sind, wenn sie als Einzelpartikel verabreicht werden. Des weiteren kann mit einer einzigen Darreichungsform ein weiter Dosisbereich abgedeckt werden, in dem unterschiedliche Mengen in entsprechenden Kapseln abgefüllt bzw. verabreicht werden.

Üblicherweise werden derartige kleinpartikuläre pharmazeutische Präparate in Kapseln aus Hartgelatine abgefüllt, die jedoch gegenüber der Bulkware, d.h. den kleinpartikulären pharmazeutischen Präparaten, eine Reihe von Nachteilen besitzen. So muß der Wasseranteil von Hartgelatinekapseln größer oder gleich 10% sein, da die Hartgelatinekapseln ansonsten verspröden können, so dass sie bereits im Packmittel oder beim Herausnehmen aus dem Packmittel brechen. Dies kann bei feuchteempfindlichen Präparaten zu erheblichen Stabilitätsproblemen führen, woraus häufig kurze Shelf-lifes resultieren.

Da die Relation zwischen der Präparatmenge und der Kapselhülle für verschiedene Dosen unterschiedlich ist, muß für jede Dosis eine eigene aufwendige Stabilitätsprüfung durchgeführt werden.

Die Kombination mehrerer kleinpartikulärer Präparate ist nur bedingt möglich, da die unterschiedlichen Dosierungen, d.h. das Mischungsverhältnis zwischen den einzelnen Präparaten, vorab bereits festgelegt ist. Eine konventionelle Kombinationsform von zwei Wirkstoffen, deren Einzelkomponenten in zwei bzw. drei Dosierungen vorliegen, erfordert z.B. bereits sechs fixe Arzneimittelkombinationen.

Aus dem Stand der Technik ist bekannt, mit Hilfe von Dosiervorrichtungen eine größere Menge eines kleingranulierten pharmazeutischen Präparates in eine vorgegebene Teilmenge abzumessen, welche anschließend beispielsweise an den Patienten ausgegeben wird.

So offenbaren die US 4,805,811 und die EP-0 787 979 A1 jeweils eine Dosiereinrichtung mit einer Kammer zur Aufnahme einer größeren Menge eines kleingranulierten pharmazeutischen Präparates. An der Dosiereinrichtung ist ein Drehschieber vorgesehen, an welchem mehrere Dosierkammern mit vorgegebenen Volumina ausgebildet sind. Durch Drehen des Dosierschiebers wird aufeinanderfolgend jeweils eine der Dosierkammern mit einer Teilmenge des in der Kammer enthaltenen Präparates befüllt und beim Weiterdrehen des Dosierschiebers wieder entleert. Unterschiedliche Dosierungen werden erreicht, in dem eine entsprechende Anzahl an Teilmengen mit Hilfe des Drehschiebers aus der Kammer entnommen wird.

Durch diese bekannten Dosiereinrichtungen soll insbesondere erreicht werden, dass ältere Menschen und Kinder oder Personen, denen das Schlucken größerer Tabletten schwerfällt, dosierte Mengen an leicht zu schluckenden kleinpartikulären Präparaten abmessen und aufnehmen können.

Aus der EP-0 217 390 A2, der FR-2 380 536 sowie der FR-2 380 537 ist jeweils eine Dosiervorrichtung bekannt, die mit einer mit einem kleinpartikulären pharmazeutischen Präparat gefüllten Kammer ausgestattet ist, aus der mit Hilfe einer an einem Schieber ausgebildeten Dosierkammer bzw. einer Dosierspirale eine definierte, konstante Teilmenge des Präparates aus der Kammer entnommen werden kann.

Des weiteren sind aus der US-4,273,254, der GB 1 316 174, der US-4,237,884, der WO 95/25050 oder der US-5,255,786 sogenannte Tablettenvereinzeler bekannt, bei denen mehrere Tabletten in einer Kammer aufgenommen und beispielsweise mit Hilfe eines Schiebers einzeln aus der Kammer entnommen werden können.

Aus der GB 1 511 107 ist eine Mess- und Dosiervorrichtung zum Dosieren von körnigen Legierungen oder Metall beschrieben, bei der das Volumen einer Dosierkammer entsprechend einer definierten Teilmenge einstellbar ist. Dazu ist in einem Dosierschieber ein Stempel beweglich und in vorgegebenen Stellungen mit Hilfe eines keilförmigen Nockens justierbar. Ähnliche Dosiervorrichtungen sind aus der GB 215 577 und der GB 139 342 bekannt.

Ausgehend von diesem Stand der Technik ist es Aufgabe der Erfindung, eine Dosiereinrichtung bzw. ein Verfahren zur Dosierung, vorzugsweise Eigendosierung, kleinpartikulärer pharmazeutischer Präparate anzugeben, mit der bzw. mit dem eine patientenorientierte, individuell und stufenlos anpassbare exakte Dosierung eines kleinpartikulären pharmazeutischen Präparates bzw. kleinpartikulärer pharmazeutischer Präparate möglich ist.

Diese Aufgabe wird durch eine Dosiereinrichtung mit den Merkmalen nach Anspruch 1 gelöst.

Die Erfindung basiert auf dem Grundgedanken, eine exakte Dosierung des Präparates mit Hilfe der Dosierkammer selbst, und nicht wie bisher üblich, durch mehrfaches Befüllen und Entleeren einer verhältnismäßig kleinen Dosierkammer, vorzunehmen. Zu diesem Zweck wird erfindungsgemäß vorgeschlagen, die Dosierkammer variabel zu gestalten, um so das Volumen der Dosierkammer und damit die vom Volumen der Dosierkammer abhängige Teilmenge verändern zu können, welche aus der in der Kammer enthaltenen größeren Menge des Präparates entnommen wird.

Durch die Erfindung ist es möglich, eine patientenorientierte individuelle Anpassung der Dosen, zum Beispiel bei einer Dosierung des Präparates bezogen auf das Körpergewicht oder bei einer Anpassung der Dosis an diurnale Bedürfnisse, vorzunehmen. Des weiteren kann die Dosis des Präparates über einen längeren Einnahmezeitraum individuell angepaßt werden, so dass Präparate, die beispielsweise in einer Anfangsphase in größeren Dosen eingenommen werden müssen, über den Einnahmezeitraum gezielt verringert werden können. Ebenso können Patienten anfangs niedrige Dosen allmählich auf die therapeutisch notwendige Dosis steigern, um so die Verträglichkeit zu verbessern. Von besonderem Vorteil ist diese Flexibiltät der Dosierung bei Kindern, da hierbei aufgrund der unterschiedlichen Körpergewichte von wenigen kg bis ca 70 kg eine Vielzahl von Dosisstärken notwendig ist. Geeignete Ausführungsformen der erfindungsgemässen Dosiervorrichtung gestatten die Dosierung pharmaezutischer Präparate z.B. im Bereich von 40-800 vorzugsweise 50-750 mg.

Weiterte Vorteile der Erfindung ergeben sich aus der nachfolgenden Beschreibung, den Unteransprüchen und der Zeichnung.

So ist bei einer besonders bevorzugten Ausführungsform der erfindungsgemäßen Dosiervorrichtung das Volumen der Dosierkammer stufenlos einstellbar. Auf diese Weise ist eine sehr exakte Dosierung des Präparates bzw. der Präparate möglich, um die Dosen beispielsweise über einen längeren Einnahmezeitraum kontinuierlich verändern und täglich sehr exakt vorgeben zu können.

Alternativ kann das Volumen auch stufenweise eingestellt werden, in dem das Volumen der Dosierkammer in gleiche oder unterschiedlich bemessene Teilvolumina untergliedert ist. Dies ist beispielsweise dann von Vorteil, wenn über einen längeren Zeitraum die gleiche Dosis des Präparates eingenommen, die Dosiervorrichtung jedoch von unterschiedlichen Personen verwendet werden soll.

Um die Dosierung vornehmen zu können, wird bei einer besonders bevorzugten Ausführungsform der erfindungsgemäßen Dosiervorrichtung vorgeschlagen, am Dosierelement einen Stempel vorzusehen, der am Dosierelement verschiebbar gelagert ist und dessen Stempelkopf zur Veränderung des Volumens der Dosierkammer in dieser hin und her beweglich ist.

Zum Verstellen des Stempels ist bei einer Weiterbildung dieses Ausführungsbeispieles eine Gewindespindel vorgesehen ist, mit der der Stempel in seiner Position einstellbar ist. Durch die Gewindespindel ist es möglich, das Volumen der Dosierkammer von außen ohne großen Aufwand stufenlos einzustellen. Des weiteren ist es möglich, durch Vorsehen einer Skala am Dosierelement die Position des Stempels außen anzuzeigen, so dass eine sehr exakte Dosierung des Präparates mit hoher Wiederholrate möglich ist. Die Skala kann beispielsweise eine Relation zwischen dem Körpergewicht und der Dosis des Präparates angeben.

Bei einer alternativen Ausführungsform der erfindungsgemäßen Dosiervorrichtung wird vorgeschlagen, am Dosierelement eine Rasteinrichtung vorzusehen, mit der der Stempel in verschiedenen Positionen am Dosierelement verrastbar ist. Hierdurch ist eine gestufte und sehr exakte Einstellung der Dosis des Präparates mit hoher Wiederholgenauigkeit auf einfache Weise möglich.

Des weiteren wird bei einer weiteren alternativen Ausführungsform vorgeschlagen, für eine gestufte Einstellung des Volumens der Dosierkammer in die Dosierkammer zur Volumeneinstellung Volumeneinsätze unterschiedlicher Außenabmessungen lösbar zu befestigen. Zum Verändern des Volumens der Dosierkammer muß so lediglich der beispielsweise entsprechend einer Dosierungstabelle jeweils vorgegebene Volumeneinsatz in die Dosierungskammer eingesetzt werden. Die Verwendung derartiger Volumeneinsätze ist insbesondere dann von Vorteil, wenn über einen längeren Zeitraum dieselbe Dosis des Präparates eingenommen werden soll, so dass der Patient lediglich einen der jeweiligen Dosis zugeordneten Volumeneinsatz einsetzen muß. Durch Verwendung sich farblich unterscheidender und/oder entsprechend markierter Volumeneinsätze ist eine Unterscheidung der verschiedenen Volumeneinsätze auch für ältere Patienten problemlos möglich.

Um die Betätigung der Dosiereinrichtung zu erleichtern, wird ferner vorgeschlagen, dass das Dosierelement in seine Füllstellung mechanisch vorgespannt und gegen diese Vorspannkraft in seine Abgabestellung bewegbar ist. Hierdurch wird sichergestellt, dass das Dosierelement, sobald es nach Abgabe des Präparates wieder losgelassen wird, wieder in seine Füllstellung zurückkehrt. Auf diese Weise wird unter anderem verhindert, dass das in der Kammer der Dosiereinrichtung enthaltene Präparat von außen her verunreinigt wird, da die Dosiereinrichtung bei sich in der Füllstellung befindlichem Dosierelement nach außen hin abgeschlossen ist.

Als Dosierelement wird bei einer besonders bevorzugten Ausführungsform der erfindungsgemäßen Dosiervorrichtung die Verwendung eines Dosierschiebers vorgeschlagen, an dem die Dosierkammer ausgebildet und der in einem Kanal zwischen seiner Füllstellung und seiner Abgabestellung verschieblich ist. Alternativ wird die Verwendung eines Drehschiebers als Dosierelement vorgeschlagen, der in einer Aufnahme zwischen seiner Füllstellung und seiner Abgabestellung drehbar ist. Sowohl der in einem Kanal verschiebliche Dosierschieber als auch der Drehschieber sind einfach zu bedienen, so dass die erfindungsgemäße Dosiervorrichtung problemlos auch von älteren oder geschwächten Patienten benutzt werden kann.

Des weiteren ist es denkbar, aus Sicherheitsgründen eine Kindersicherung an der Dosiervorrichtung vorzusehen, die eine ungewollte Betätigung insbesondere des Dosierschiebers oder Drehschiebers durch Kinder verhindert.

Die Dosierkammer ist beim Dosierschieber bzw. beim Drehschieber vorzugsweise als Durchgangsöffnung ausgebildet, deren eines offene Ende in der Füllstellung mit einer Auslassöffnung der Kammer und deren anderes Ende in der Abgabestellung mit einer Abgabeöffnung fluchtet, wobei die offenen Enden in den Zwischenstellungen des Schiebers durch den Grundkörper sowie eine Platte auf der Unterseite des Grundkörpers verschlossen sind. Durch diese Art der Ausbildung der Dosierkammer als Durchgangsöffnung ist sichergestellt, dass die Dosierkammer in ihrer Füllstellung ordnungsgemäß befüllt und in der Abgabestellung vollständig entleert werden kann.

Bei einer besonders bevorzugten Ausführungsform der erfindungsgemäßen Dosiervorrichtung ist an dieser ein das pharmazeutische Präparat enthaltender Vorratsbehälter lösbar befestigbar, der die Kammer der Dosiervorrichtung mit dem Präparat befüllt. Die Verwendung eines separaten Vorratsbehälters hat den Vorteil, dass während der Lagerzeit die Bulkware in dichten Packmitteln - falls sinnvoll mit Trockenstopfen - absolut trocken verpackt werden kann, d.h. Stabilitätsprobleme aufgrund von Feuchte werden verhindert. Erst bei Anbruch des Arzneimittels wird die Dosiervorrichtung auf den Vorratsbehälter aufgesetzt, so dass die weitere Stabilität des Präparates nur für die Verbrauchsdauer (Tage bis wenige Wochen) gewährleistet sein muß. Bei einer Unterbrechung der Einnahme kann die Dosiervorrichtung auch wieder durch den Stopfen ersetzt werden, wodurch wieder ein dichtes Packmittel erreicht wird. Ferner muß eine Stabilitätsprüfung für die Bulkware nur für die längste Gebrauchsdauer mit der Dosiervorrichtung, d.h. für die niedrigste Dosierung, vorgenommen werden.

Häufig werden mehrere kleinpartikuläre Präparate miteinander kombiniert in einer Hartgelkapsel abgefüllt, wobei zwischen den Präparaten ein definiertes Mischungsverhältnis bestehen muß, dass sich durch die Dosierung der Präparate ergibt. Bei derartigen Kombinationen können jedoch Kompatibilitätsprobleme auftreten. So sind bei Präparatkombinationen nur fixe Kombinationen möglich, d.h. wenn zum Beispiel die Präparate A und B einer Kombination in jeweils drei Dosierungen verabreicht werden, ergeben sich neun mögliche fixe Kombinationen. Bei bestimmten Präparatkombinationen sind jedoch nur wenige mögliche fixe Kombinationen erwünscht, so dass Probleme bei der Dosierung entstehen können.

Um auch mehrere Präparate miteinander kombiniert dosieren zu können, wird bei einer besonders bevorzugten Ausführungsform der erfindungsgemäßen Dosiervorrichtung vorgeschlagen, an der Dosiervorrichtung zumindest eine weitere Kammer zur Aufnahme eines weiteren kleinpartikulären pharmazeutischen Präparates vorzusehen, aus der durch die Abgabeöffnung eine Teilmenge des weiteren Präparates abzugeben ist. Hierdurch ist es möglich, entsprechend der Anzahl der zusätzlichen Kammern verschiedene Präparate in einem Arbeitsvorgang einzeln zu dosieren und im richtigen Verhältnis miteinänder zu vermischen.

Bei diesem Ausführungsbeispiel der erfindungsgemäßen Dosiervorrichtung wird ferner vorgeschlagen, am Dosierelement für das weitere Präparat eine weitere Dosierkammer vorzusehen, die in der Füllstellung zum Befüllen mit dem weiteren Präparat mit einer Kammeröffnung der weiteren Kammer verbunden ist und die in der Abgabestellung oder einer Zwischenstellung des Dosierelementes mit der Abgabenöffnung zur Abgabe des weiteren Präparates verbunden ist. Auf diese Weise können durch eine einzige Bewegung des Dosierelementes die Präparate dosiert und miteinander gemischt werden. Alternativ ist auch denkbar, für jede Kammer ein eigenes Dosierelement vorzusehen.

Als Werkstoffe für die Herstellung der erfindungsgemäßen Dosiervorrichtung wird vorzugsweise ein Kunststoffmaterial eingesetzt, das zur Herstellung dünnwandiger Spritzgussteile verwendet werden kann. Bevorzugt sind hierbei insbesondere Kunststoffe, aus denen sich keine Weichmacher herauslösen. In besonderen Fällen kann es nützlich sein, ein Kunststoffmaterial einzusetzen, das autoklavierbar ist.

Gemäß einem weiteren Aspekt betrifft die Erfindung ein Verfahren zur Dosierung kleinpartikulärer pharmazeutischer Präparate, insbesondere von Präparaten in Form von Pellets, Granulaten oder Extrudaten. So kann eine Eigendosierung durch den Benutzer, beispielsweise den Patienten, den Arzt oder auch den Apotheker, unmittelbar vor der Einnahme des Präparates erfolgen. Bei dem erfindungsgemäßen Verfahren wird in einer Kammer eine größere Menge des Präparates bereitgestellt und anschließend eine definierte Teilmenge des Präparates aus der Kammer in eine Dosierkammer mit vorgegebenem Volumen abgefüllt, wobei das Volumen der Dosierkammer, welches die abzufüllende Teilmenge vorgibt, vor dem Befüllen mit dem Präparat eingestellt wird. Die so abgemessene Teilmenge wird danach aus der Dosierkammer abgegeben.

Gemäß einem dritten Aspekt betrifft die Erfindung ein weiteres Verfahren zur Dosierung mehrere Präparate, wobei bei der Dosierung gleichzeitig auch das Mischungsverhältnis zwischen den Präparaten eingestellt wird. Ähnlich dem zuvor geschilderten Verfahren werden bei diesem Verfahren von jedem Präparat jeweils eine größere Menge in separaten Kammern bereitgestellt und anschließend von jeder Menge eine vorgegebene Teilmenge des jeweiligen Präparates mit Hilfe einer im Volumen einstellbaren Dosierkammer entnommen.

Nachfolgend wird die Erfindung anhand eines bevorzugten Anwendungsbeispieles unter Bezugnahme auf die beigefügte Zeichnung näher erläutert. Darin zeigt:
- Fig. 1: eine perspektivische Darstellung einer erfindungsgemäßen Dosiervorrichtung zur Abgabe einer definierten Teilmenge eines kleinpartikulären pharmazeutischen Präparates;
- Fig. 2: eine Draufsicht auf die erfindungsgemäße Dosiervorrichtung nach Fig. 1; und
- Fig. 3: eine Schnittansicht durch die erfindungsgemäße Dosiervorrichtung entlang des Schnittes A-A in Fig. 2.

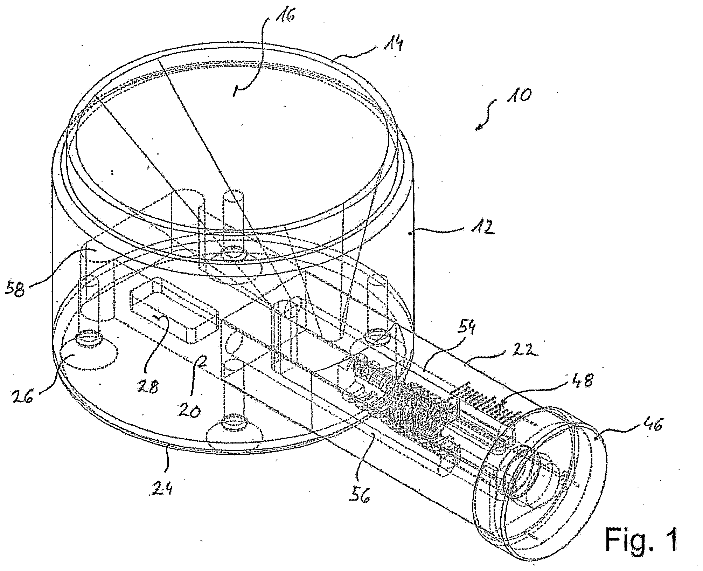

In den Fig. 1 bis 3 ist eine erfindungsgemäße Dosiervorrichtung 10 zur Abgabe einer definierten Teilmenge eines kleinpartikulären pharmazeutischen Präparates dargestellt.

Die Dosiervorrichtung 10 weist einen etwa zylindrischen Grundkörper 12 auf, der als Kunststoffspritzteil ausgebildet ist. Von der Oberseite des Grundkörpers 12 steht ein sich axial in Richtung der Symmetrieachse des Grundkörpers 12 erstreckender, umlaufender Bund 14 ab. Auf den umlaufenden Bund 14 kann ein nicht dargestellter Vorratsbehälter für das pharmazeutische Präparat mit seiner Behälteröffnung lösbar aufgesteckt werden.

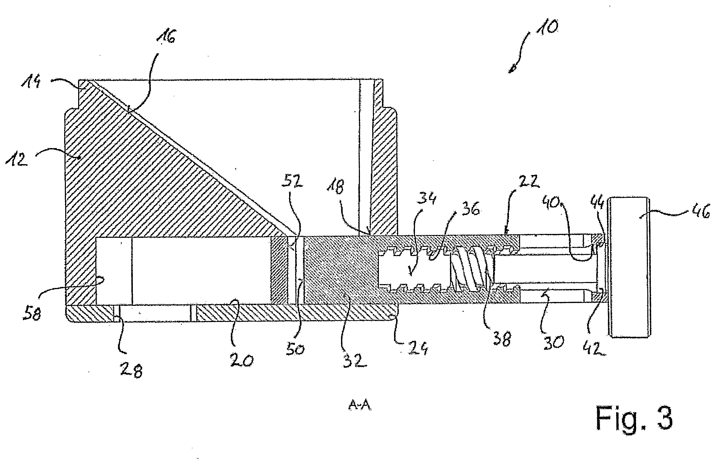

Wie die Schnittansicht in Fig. 3 zeigt, ist im Grundkörper 12 ausgehend von dessen Oberseite eine sich asymmetrisch bezüglich der Symmetrieachse des Grundkörpers 12 zur Unterseite des Grundkörpers 12 hin trichterförmig verjüngende Kammer 16 ausgebildet. Die sich asymmetrisch verjüngende Kammer 16 geht in ein Langloch 18 über, welches in einen quer zur Symmetrieachse des Grundkörpers 12 verlaufenden Kanal 20 mündet, welcher gleichfalls am Grundkörper 12 ausgebildet ist. Durch den asymmetrischen Verlauf der Kammer 16 wird erreicht, dass das Langloch 18 mit geringem radialen Abstand zur Wand des Grundkörpers 12 verläuft, wie Fig. 3 zeigt, wobei das Langloch 18 in seiner Längsrichtung parallel zur Längsrichtung des Kanals 20 verläuft.

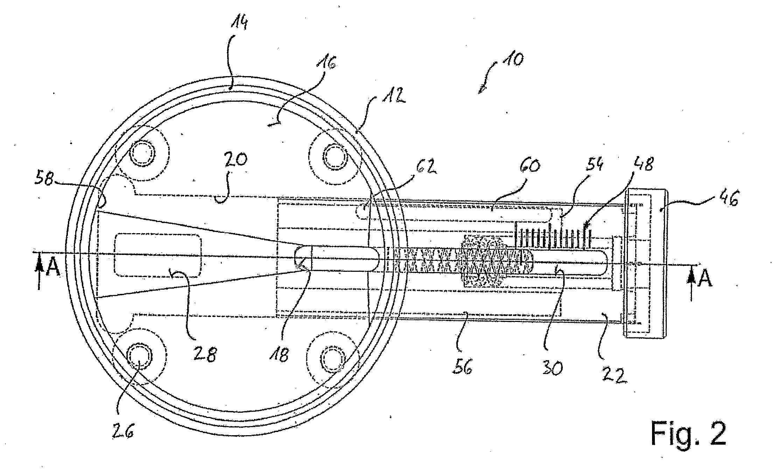

In den Kanal 20 ist ein im Querschnitt etwa rechteckiger Dosierschieber 22 eingesetzt, welcher in Längsrichtung des Kanals 20 hin und her verschieblich ist. An der Unterseite des Grundkörpers 12 ist ferner eine runde Platte 24 durch Schrauben 26 (in den Fig. 1 und 2 gestrichelt dargestellt) befestigt. An der Platte 24 ist eine rechteckige Abgabeöffnung 28 ausgespart, welche mit ihrer Längsrichtung in Längsrichtung des Kanals 20 verläuft und zu diesem fluchtet. Die Platte 24 ist dabei so am Grundkörper 12 verschraubt, dass der geringste radiale Abstand der Abgabeöffnung 28 zur Mantelfläche des Grundkörpers 12 in etwa dem geringsten radialen Abstand des Langlochs 18 zur Mantelfläche des Grundkörpers 12 entspricht, die Abgabeöffnung 28 und das Langloch 18 jedoch nahe den entgegengesetzten Enden des Kanals 20 angeordnet sind.

Wie insbesondere die Fig. 2 und 3 zeigen, ist im Dosierschieber 22 in dessen Längsrichtung ein Schlitz 30 ausgebildet, der sich annähernd über die gesamte Länge des Dosierschiebers 22 erstreckt, jedoch an seinen Enden geschlossen ist. Der Dosierschieber 22 ist dabei so in den Kanal 20 eingesetzt, dass der Schlitz 30 an seiner offenen Oberseite abschnittsweise von der Unterseite des Grundkörpers 12 und an seiner offenen Unterseite von der Oberseite der Platte 24 abgedeckt ist.

Im Schlitz 30 ist ein Stempel 32 verschieblich aufgenommen, der an seinem dem Grundkörper 12 angewandten Ende mit einer Gewindebohrung 34 mit einem Schneckengewinde 36 versehen ist. In das Schneckengewinde 36 ist eine in Längsrichtung des Dosierschiebers 22 verlaufende Gewindespindel 38 eingeschraubt, die durch eine Lageröffnung 40 aus dem aus dem Kanal 20 ragenden Ende des Dosierschiebers 22 hervorsteht. Auf Höhe der Lageröffnung 40 ist an der Gewindespindel 38 ein umlaufender Lagerbund 42 vorgesehen, mit dem die Gewindespindel 38 in einer in der Lageröffnung 40 ausgebildeten Nut 44 axial gesichert ist. Am freien Ende der Gewindespindel 38 ist eine Rändelschraube 46 befestigt, mit der die Gewindespindel 38 um ihre Längsachse von Hand hin und her gedreht werden kann. Am Innendurchmesser der Rändelschraube 46 sind 4 Kerben eingearbeitet (in Fig. 1 sichtbar). Diese Kerben greifen an einer Ecke des Dosierschiebers 22 ein. Die übrigen 3 Ecken des Dosierschiebers sind in diesem Bereich abgeflacht. Damit wird die Rändelschraube 46 in 90° Schritten eingerastet. Bei einer Steigung der Spindel von 4mm, ergibt dies eine in 1mm-Schritten abgestufte Einstellmöglichkeit. Die Position des Stempels 32 im Schlitz 30 kann an Hand einer an der Oberseite des Dosierschiebers 22 vorgesehenen Skala 48 (vgl. Fig. 1 und 2) abgelesen werden.

Durch Drehen der Rändelschraube 36 kann der Stempel 32 innerhalb des Schlitzes 30 in dessen Längsrichtung hin und her verstellt werden, wobei der Stempelkopf 50 an der Stirnseite des Stempels 32 mit der Wand des Schlitzes 30 eine Dosierkammer 52 bildet, deren Volumen somit mit Hilfe des Stempels 32 stufenlos eingestellt werden kann, wie später noch im Detail beschrieben wird.

Zu beiden Seiten des Schlitzes 30 sind parallel zu diesem verlaufend im Dosierschieber 22 zwei zylindrische Bohrungen 54 und 56 ausgebildet, die sich ausgehend von dessen in den Kanal 20 eingeführten Stirnseite in Richtung der Lageröffnung 40 erstrecken. In jeder Bohrung 54 und 56 ist in fertig montiertem Zustand der Dosiervorrichtung 10 eine Druckfeder (nicht dargestellt) aufgenommen, die sich an der Wand einer Tasche 58 abstützen, welche an dem dem Einführungsende des Kanals 20 entgegengesetzten Ende ausgebildet ist.

Wie die Draufsicht auf die Dosiervorrichtung 10 in Fig. 2 in gestrichelten Linien ferner zeigt, ist an der Unterseite des Dosierschiebers 22 eine gleichfalls in dessen Längsrichtung verlaufende Nut 60 ausgebildet, in der ein von der Oberseite der Platte 24 abstehender Stift 62 aufgenommen ist. Mit Hilfe des Stiftes 62 wird die Längsbewegung des Dosierschiebers 22 im Kanal 20 begrenzt, wobei der Dosierschieber 22 durch die nicht dargestellten Druckfedern nur soweit nach außen gedruckt werden kann, bis der Dosierschieber 22 unter Vorspannung an dem Stift 62 anliegt, so wie es in Fig. 2 dargestellt ist. In dieser sogenannten Füllstellung befindet sich der Dosierschieber 22 mit seiner Dosierkammer 52 unmittelbar unterhalb des Langloches 18 der Kammer 16.

Wird der Dosierschieber 22 von Hand gegen die Kraft der Druckfedern in den Kanal 20 gedrückt, begrenzt der Stift 62 die Bewegung des Dosierschiebers 22 in den Kanal 20 derart, dass sich der Dosierschieber 22 mit seiner Dosierkammer 52 über der Abgabeöffnung 28 in der sogenannten Abgabestellung befindet. In den Zwischenstellungen zwischen der Füllstellung und der Abgabestellung ist die Dosierkammer 52 von der Unterseite des Grundkörpers 12 sowie von der Oberseite der Platte 24 verschlossen.

Zur Benutzung der erfindungsgemäßen Dosiervorrichtung 10 wird zunächst mit Hilfe der Rändelschraube 46 und der Skala 48 die Position des Stempels 32 im Schlitz 30 eingestellt, wodurch das Volumen der Dosierkammer 52 eingestellt wird. Die Einstellung des Volumens erfolgt dabei beispielsweise in Abhängigkeit vom Körpergewicht, das auf die Skala 48 als Maßeinheit bezogen wird. Nach dem Einstellen des Volumens der Dosierkammer 52 wird die Dosiervorrichtung 10 mit Hilfe des Bundes 14 in umgedrehtem Zustand, d.h. mit der Platte 24 nach oben gewandt, auf die Öffnung des nicht dargestellten, geöffneten Vorratsbehälters aufgesteckt.

Danach wird die Dosiervorrichtung 10 gemeinsam mit dem Vorratsbehälter umgedreht, so dass ein Teil des im Vorratsbehälter enthaltenen kleinpartikulären pharmazeutischen Präparates in die Kammer 16 fällt. Dabei fällt eine Teilmenge des Präparates durch das Langloch 18 in die Dosierkammer 52, wobei das zuvor eingestellte Volumen der Dosierkammer 52 die Teilmenge des Präparates vorgibt. Nach dem Befüllen der Dosierkammer 52 wird der Dosierschieber 22 gegen die Kraft der nicht dargestellten Druckfedern von seiner Füllstellung in die Abgabestellung bewegt, in der die Dosierkammer 52 zur Abgabeöffnung 28 ausgerichtet ist. Hierdurch fällt die in der Dosierkammer 52 enthaltene Teilmenge des pharmazeutischen Präparates aus der Dosierkammer 52 durch die Abgabeöffnung 28 beispielsweise in einen vom Benutzer bereitgestellten Behälter. Nach dem Abgeben des Präparates wird der Dosierschieber 22 vom Benutzer ausgelassen, so dass der Dosierschieber 22 durch die Druckfedern wieder in seine Füllstellung zurücckehren kann. Der Benutzer kann dann den Entnahmevorgang entsprechend den vorgegebenen Dosierungen und Einnahmezeiträume solange wiederholen, bis der Vorratsbehälter gegebenenfalls vollständig entleert ist.

Alternativ hat der Benutzer die Möglichkeit, die Dosiervorrichtung 10 wieder vom Vorratsbehälter zu entfernen und den Vorratsbehälter anschließend in herkömmlicher Weise zu verschließen.

Bei der in den Fig. 1 bis 3 dargestellten Dosiervorrichtung 10 handelt es sich lediglich um eine mögliche Ausführungsform der erfindungsgemäßen Dosiervorrichtung. Grundsätzlich sind jedoch die unterschiedlichsten Ausführungsformen und Weiterbildungen dieses in den Fig. 1 bis 3 gezeigten Prinzips denkbar.

So ist es beispielsweise möglich, den Bund 16 durch ein Innengewinde mit Dichtung zu ersetzten, in das ein durch einen Schraubdeckel verschlossener Vorratsbehälter mit seinem Außengewinde eingeschraubt werden kann. Ferner kann für bestimmte Vorratsbehälter an der Dosiervorrichtung 10 eine Kopplungseinrichtung vorgesehen sein, auf die der Vorratsbehälter aufgesteckt wird, wobei beispielsweise ein an der Kopplungsvorrichtung vorgesehener Dorn eine den Vorratsbehälter verschließende Membran durchdringt, damit das im Vorratsbehälter enthaltene Präparat in die Dosiervorrichtung 10 gelangt. Alternativ ist es auch möglich, die Dosiervorrichtung 10 an einem Vorratsbehälter zu integrieren, so dass die Dosiervorrichtung 10 einstückig mit dem Vorratsbehälter ausgebildet ist.

Ferner ist es möglich, anstelle des durch eine Gewindespindel 38 stufenlos zu verstellenden Stempels 32 eine Ratseinrichtung vorzusehen, mit der der Stempel 32 in vorgegebenen Raststellungen im Schlitz 30 zu verrasten ist. Des weiteren kann ein Dosierschieber 22 eingesetzt werden, bei dem eine Dosierkammer mit fest vorgegebenen Volumen ausgebildet ist, wobei zur Volumenveränderung in der Dosierkammer Volumeneinsätze beispielsweise durch Verrasten lösbar befestigt werden.

Auch ist es möglich, den Dosierschieber 22 durch Rasteinrichtungen, wie Rastnasen, in den verschiedenen Stellungen, wie der Füllstellung, der Abgabestellung oder einer Zwischenstellung zu arretieren, um beispielsweise ein ordnungsgemäßes Befüllen oder Entleeren der Dosierkammer 52 sicherzustellen. Eine Arretierung des Dosierschiebers 22 in der Abgabestellung oder einer Zwischenstellung ist insbesondere dann von Vorteil, wenn das Volumen der Dosierkammer 52 bei aufgesetztem Vorratsbehälter eingestellt werden soll.

Der Vorratsbehälter ist vorzugsweise aus einem einfach zu verarbeitenden Kunststoffmaterial gefertigt, dass beispielsweise durch Spritzgießen zu verarbeiten ist. Des weiteren sollte das Material autoklavierbar sein, damit es gegebenenfalls entkeimt werden kann.

Bei einer besonders bevorzugten Ausführungsform der erfindungsgemäßen Dosiervorrichtung sind zwei Kammern für zwei unterschiedliche Präparate ausgebildet, so dass ein Kombinationspräparat mit individueller Dosierung der einzelnen Komponenten vorgenommen werden kann.

Da der erfindungsgemäße Spender nach Applikation der gesamten Dosis mit Nachfüllpackungen wiederbefüllt werden kann, werden bei Langzeittherapie auch Kosten eingespart, da die Kosten für Einzelkapseln entfallen. Durch Wahl dichter Packungsmittel, gegebenenfalls mit Trocknungsmitteln, kann eine erhebliche Verbesserung der Stabilität erreicht werden.

### Bezuaszeichenliste:

- 10: Dosiervorrichtung
- 12: Grundkörper
- 14: Bund
- 16: Kammer
- 18: Langloch
- 20: Kanal
- 22: Dosierschieber
- 24: Platte
- 26: Schrauben
- 28: Abgabeöffnung
- 30: Schlitz
- 32: Stempel
- 34: Gewindebohrung
- 36: Schneckengewinde
- 38: Gewindespindel
- 40: Lageröffnung
- 42: Lagerbund
- 44: Nut
- 46: Rändelschraube
- 48: Skala
- 50: Stempelkopf
- 52: Dosierkammer
- 54: zylindrische Bohrung
- 56: zylindrische Bohrung
- 58: Tasche
- 60: Nut
- 62: Stift

## Patentansprüche

1. Vorrichtung zur Dosierung kleinpartikulärer pharmazeutischer Präparate im Dosierungsbereich von 40-800 mg die eine Kammer (16) zur Aufnahme einer größeren Menge des Präparates sowie ein Dosierelement mit einer Dosierkammer (52) zur Aufnahme einer definierten Teilmenge des Präparates aufweist, wobei die Dosierkammer zwischen einer Füllstellung, in der sie mit Präparat aus der Kammer (16) zu befüllen ist, und einer Abgabestellung beweglich ist, in der das Präparat aus der Dosierkammer (52) aus der Dosiervorrichtung auszugeben ist,
wobei
das Dosierelement ein Dosierschieber (22) ist, an dem die Dosierkammer (52) ausgebildet ist und der in einem Kanal (20) in Längsrichtung des Kanals (20) zwischen seiner Füllstellung und seiner Abgabestellung verschieblich ist und der durch eine Druckfeder in seine Füllstellung vorgespannt und gegen die Vorspannkraft in seine Abgabestellung bewegbar ist, und
**dadurch gekennzeichnet,**
**dass** im Dosierschieber (22) ein Stempel (32) verschieblich gelagert ist, dessen Stempelkopf (50) zur Veränderung des Volumens der Dosierkammer (52) durch Drehung einer an einer Gewindespindel (38) befestigten Rändelschraube (36) in dem Dosierschieber (22) hin und her beweglich ist, so dass das Volumen der Dosierkammer (52) stufenlos oder stufenweise zur Vorgabe der aus der Dosiervorrichtung abzugebenden definierten Teilmenge des Präparates einstellbar ist.

2. Dosiervorrichtung nach Anspruch 1, **dadurch gekennzeichnet, dass** an der Unterseite des Dosierschiebers (22) eine in dessen Längsrichtung verlaufende Nut (60) ausgebildet ist, in der ein Stift (62) aufgenommen werden kann, so dass die Längsbewegung des Dosierschiebers (22) begrenzt wird.

3. Dosiervorrichtung nach Anspruch 1 oder 2, **dadurch gekennzeichnet, dass** der Stempel durch eine Rasteinrichtung in verschiedenen Positionen am Dosierelement verrastbar ist.

4. Dosiervorrichtung nach Anspruch 1, 2 oder 3, **dadurch gekennzeichnet, dass** in die Dosierkammer zur Volumeneinstellung Volumeneinsätze unterschiedlicher Außenabmessungen lösbar befestigbar sind.

5. Dosiervorrichtung nach einem der vorhergehenden Ansprüche, **dadurch gekennzeichnet, dass** die am Dosierschieber (22) vorgesehene Dosierkammer (52) als Durchgangsöffnung ausgebildet ist, deren eines offene Ende in der Füllstellung mit einer Auslassöffnung (18) der Kammer (16) und deren anderes offenes Ende in der Abgabestellung mit einer Abgabeöffnung (28) fluchtet, wobei die offenen Enden in den Zwischenstellungen des Schiebers durch den Grundkörper (12) und die Platte (24) verschlossen sind.

6. Dosiervorrichtung nach mindestens einem der vorhergehenden Ansprüche, **dadurch gekennzeichnet, dass** an die Dosiervorrichtung ein das pharmazeutische Präparat enhaltender Vorratsbehälter lösbar befestigbar ist, der die Kammer (16) mit dem Präparat befüllt.

7. Dosiervorrichtung nach mindestens einem der vorhergehenden Ansprüche, **dadurch gekennzeichnet, dass** zumindest eine weitere Kammer zur Aufnahme eines weiteren kleinpartikulären pharmazeutischen Präparates vorgesehen ist, aus der durch die Abgabeöffnung eine Teilmenge des weiteren Präparates abzugeben ist.

8. Dosiervorrichtung nach Anspruch 7, **dadurch gekennzeichnet, dass** am Dosierelement eine weitere Dosierkammer vorgesehen ist, die in der Füllstellung zum Befüllen mit dem weiteren Präparat mit einer Kammeröffnung der weiteren Kammer verbunden ist und die in der Abgabestellung oder einer Zwischenstellung des Dosierelementes mit der Abgabenöffnung zur Abgabe des weiteren Präparates verbunden ist.

9. Dosiervorrichtung nach mindestens einem der vorhergehenden Ansprüche, **dadurch gekennzeichnet, dass** die Dosiervorrichtung aus einem Kunststoffmaterial gefertigt und vorzugsweise als Spritzgussteil ausgebildet ist, wobei das Kunststoffmaterial gegebenenfalls autoklavierbar ist.

## Claims

1. Device for dosing small-particled pharmaceutical preparations in the dosing range from 40-800 mg, which comprises a chamber (16) for accommodating a larger amount of the preparation and a dosing element with a dosing chamber (52) for accommodating a defined partial quantity of the preparation, the dosing chamber being movable between a filling position, in which it is to be filled with preparation from the chamber (16), and a dispensing position in which the preparation from the dosing chamber (52) is to be discharged from the dosing device,
wherein the dosing element is a dosing slide (22), on which the dosing chamber (52) is provided and which is movable in a channel (20) in the longitudinal direction of the channel (20) between its filling position and its dispensing position and which is biased into its filling position by a compression spring and is movable into its dispensing position counter to the biasing force,
**characterized in that**
there is a pusher (32) movably mounted in the dosing slide (22), the head (50) of the pusher being movable back and forth in the dosing chamber (52) by rotation of helical thread (36) attached to a threaded spindle (38) in order to vary the volume of the dosing chamber, so that the volume of the dosing chamber (52) is adjustable smoothly or stepwise in order to set the defined partial quantity of preparation to be dispensed from the dosing device.

2. Dosing device according to claim 1, **characterised in that** a groove (60) is formed on the underside of the dosing slide (22) and extends in the longitudinal direction of said slide, the groove being able to receive a pin (62) so that the longitudinal movement of the dosing slide (22) is limited.

3. Dosing device according to claim 1 or 2, **characterised in that** the pusher can be latched in various positions on the dosing element by means of a latching device.

4. Dosing device according to claim 1, 2 or 3, **characterised in that** volume inserts with different external dimensions are releasably fixable in the dosing chamber in order to vary the volume.

5. Dosing device according to one of the preceding claims, **characterised in that** the dosing chamber (52) provided on the dosing slide (22) is in the form of a through-opening, one open end of which is aligned with an outlet opening (18) of the chamber (16) in the filling position and the other open end of which is aligned with a dispensing opening (28) in the dispensing position, the open ends being sealed off by the base (12) and the plate (24) in the intermediate positions of the slide.

6. Dosing device according to at least one of the preceding claims, **characterised in that** a storage container containing the pharmaceutical preparation is releasably fixable to the dosing device, said storage container filling the chamber (16) with the preparation.

7. Dosing device according to at least one of the preceding claims, **characterised in that** at least one further chamber is provided for accommodating an additional small-particled pharmaceutical preparation, wherein a partial quantity of the additional preparation is to be dispensed from the further chamber through the dispensing opening.

8. Dosing device according to claim 7, **characterised in that** a further dosing chamber is provided on the dosing element, wherein the further dosing chamber is connected with a chamber opening of the further chamber in the filling position for filling with the additional preparation and is connected to the dispensing opening in the dispensing position or an intermediate position of the dosing element in order to dispense the additional preparation.

9. Dosing device according to at least one of the preceding claims, **characterised in that** the dosing device is made from a plastics material and is preferably constructed as an injection moulded part, the plastics material optionally being suitable for autoclaving.

## Revendications

1. Dispositif de dosage de préparations pharmaceutiques à particules de petite taille dans la plage de dosage de 40 - 800 mg, qui présente un compartiment (16) pour recevoir une plus grande quantité de la préparation ainsi qu'un élément doseur avec un compartiment doseur (52) pour recevoir une quantité partielle définie de la préparation, dans lequel le compartiment doseur peut être déplacé entre une position de remplissage, dans laquelle il est à remplir avec de la préparation provenant du compartiment (16), et une position de distribution, dans laquelle la préparation provenant du compartiment doseur (52) est à distribuer à partir du dispositif de dosage,
dans lequel
l'élément doseur est un coulisseau doseur (22), sur lequel le compartiment doseur (52) est réalisé et qui peut être coulissé dans un canal (20) dans le sens longitudinal du canal (20) entre sa position de remplissage et sa position de distribution et qui est maintenu de manière précontrainte dans sa position de remplissage par un ressort de pression et peut être déplacé dans sa position de distribution à l'encontre de la force de précontrainte, et
**caractérisé en ce**
**qu'**est monté à coulissement dans le coulisseau doseur (22) un poinçon (32), dont la tête de poinçon (50) peut effectuer des mouvements de va-et-vient dans le coulisseau doseur (22) pour modifier le volume du compartiment doseur (52) en tournant une vis moletée (36) fixée sur une broche filetée (38) de sorte que le volume du compartiment doseur (52) peut être réglé en continu ou progressivement pour spécifier la quantité partielle définie de la préparation à distribuer à partir du dispositif doseur.

2. Dispositif doseur selon la revendication 1, **caractérisé en ce qu'**est réalisée sur le côté inférieur du coulisseau doseur (22) une rainure (60) s'étendant dans son sens longitudinal, dans laquelle une tige (62) peut être logée de sorte que le déplacement longitudinal du coulisseau doseur (22) est limité.

3. Dispositif doseur selon la revendication 1 ou 2, **caractérisé en ce que** le poinçon peut être enclenché par un système d'enclenchement dans différentes positions sur l'élément doseur.

4. Dispositif doseur selon la revendication 1, 2 ou 3, **caractérisé en ce que** des inserts de volume de dimensions extérieures différentes peuvent être fixés de manière amovible dans le compartiment doseur pour régler le volume.

5. Dispositif doseur selon l'une quelconque des revendications précédentes, **caractérisé en ce que** le compartiment doseur (52) prévu sur le coulisseau doseur (22) est réalisé en tant qu'une ouverture de passage, dont une extrémité ouverte est alignée dans la position de remplissage avec une ouverture de sortie (18) du compartiment (16) et dont l'autre extrémité ouverte est alignée dans la position de distribution avec une ouverture de distribution (28), dans lequel les extrémités ouvertes sont fermées dans les positions intermédiaires du coulisseau par le corps de base (12) et la plaque (24).

6. Dispositif doseur selon au moins l'une quelconque des revendications précédentes, **caractérisé en ce que** peut être fixé de manière amovible sur le dispositif doseur un réservoir contenant la préparation pharmaceutique, qui remplit le compartiment (16) avec la préparation.

7. Dispositif doseur selon au moins l'une quelconque des revendications précédentes, **caractérisé en ce qu'**est prévu pour recevoir une autre préparation pharmaceutique à particules de petite taille au moins un autre compartiment, à partir duquel une quantité partielle de l'autre préparation est à distribuer par l'ouverture de distribution.

8. Dispositif doseur selon la revendication 7, **caractérisé en ce qu'**est prévu sur l'élément doseur un autre compartiment doseur, qui est relié à une ouverture de compartiment de l'autre compartiment dans la position de remplissage pour le remplissage avec l'autre préparation et qui est relié à l'ouverture de distribution pour la distribution de l'autre préparation dans la position de distribution ou dans une position intermédiaire de l'élément doseur.

9. Dispositif doseur selon au moins l'une quelconque des revendications précédentes, **caractérisé en ce que** le dispositif doseur est fabriqué à partir d'une matière plastique et est réalisé de préférence en tant que pièce moulée par injection, dans lequel la matière plastique est éventuellement autoclavable.
